(19) Europäisches Patentamt
European Patent Office
Office européen des brevets

(11) Veröffentlichungsnummer: **0 248 175**
**B1**

# (12) EUROPÄISCHE PATENTSCHRIFT

(45) Veröffentlichungstag der Patentschrift: **24.01.90**

(51) Int. Cl.⁴: **C08F 136/08**, C08F 4/48

(21) Anmeldenummer: **87105525.7**

(22) Anmeldetag: **14.04.87**

## (54) Polyisoprene mit einem hohen Anteil von 1, 2- und 3, 4- Struktureinheiten, Verfahren zu ihrer Herstellung und ihre Verwendung.

(30) Priorität: **31.05.86 DE 3618351**
**27.06.86 DE 3621628**
**18.12.86 DE 3643250**
**07.03.87 DE 3707434**

(43) Veröffentlichungstag der Anmeldung:
**09.12.87 Patentblatt 87/50**

(45) Bekanntmachung des Hinweises auf die Patenterteilung:
**24.01.90 Patentblatt 90/4**

(84) Benannte Vertragsstaaten:
**AT BE CH DE ES FR GB IT LI LU NL SE**

(56) Entgegenhaltungen:
**EP-A- 0 095 629**
**EP-A- 0 128 607**

(73) Patentinhaber: **HÜLS AKTIENGESELLSCHAFT, Patentabteilung / PB 15 - Postfach 13 20, D-4370 Marl 1(DE)**

(72) Erfinder: **Hellermann, Walter, Dr., Waldstrasse 16, D-4270 Dorsten 21(DE)**
Erfinder: **Nordsiek, Karl-Heinz, Dr., Neumarkstrasse 4, D-4370 Marl(DE)**
Erfinder: **Wolpers, Jürgen, Dr., Hetfeld 15, D-4358 Haltern(DE)**
Erfinder: **Sunder-Plassmann, Paul, Dr., Langehegge 149, D-4370 Marl(DE)**

EP 0 248 175 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Polyisoprene, die einen Gehalt an 1,2- und 3,4-Struktureinheiten von mehr als 70 % aufweisen, ein Verfahren zu ihrer Herstellung sowie ihre Verwendung zur Herstellung von Reifen und von Dämpfungselementen. Als 1,2- und 3,4-Struktureinheiten sind folgende Kettensegmente der Polymerisation anzusehen:

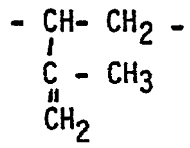
sowie
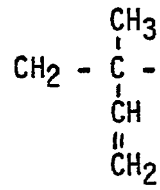

Aus dem Stand der Technik sind zahlreiche Verfahren zur Herstellung von Polyisopren bekannt. Technische Bedeutung haben vor allem die Verfahren erlangt, bei denen Isopren in einem inerten organischen Lösemittel wie z. B. Hexan, Cyclohexan oder Toluol anionisch polymerisiert wird. Als Initiator, der aber üblicherweise als Katalysator bezeichnet wird, verwendet man Alkali-organische Verbindungen, insbesondere Alkyl-Lithiumverbindungen.

Kautschuke mit sternförmiger Struktur weisen gegenüber ihren Homologen mit linearer Struktur Vorteile auf (vgl. EP-OS 0 090 365). Man erhält sie, indem man die Dienmonomeren zu sogenannten "lebenden Polymeren" und diese anschließend mit Kupplungsmitteln wie z. B. Polyhalogenverbindungen oder Divinylaromaten umsetzt. Unter den soeben beschriebenen Bedingungen erhält man ein Polyisopren, das überwiegend aus 1,4-Struktureinheiten der Formel

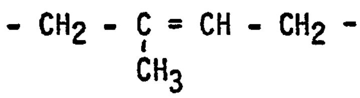

besteht.

Es ist bekannt, daß die Anwesenheit bestimmter polarer Verbindungen, die auch als Cokatalysatoren bezeichnet werden, Einfluß auf die Mikrostruktur und damit auf den Verlauf der Polymerisation im Hinblick auf eine bevorzugte Bildung von 1,2- und 3,4-Struktureinheiten hat (vgl. K. H. Nordsiek, K. M. Kiepert, Kautschuk und Gummi, Kunststoffe 35,
371 (1982) sowie K. H. Nordsiek, Kautschuk und Gummi, Kunststoffe 39, 599 (1986).

In der Vergangenheit sind eine Reihe von Verfahren zur Herstellung von Polymerisaten auf Basis von Isopren entwickelt worden, bei denen unterschiedliche Cokatalysatoren eingesetzt wurden. Es hat sich gezeigt, daß der Cokatalysator in vielfältiger Weise die Polymerisation beeinflußt. Im einzelnen sind folgende Anforderungen an den Cokatalysator zu stellen:

1. Er soll zu keiner Geruchsbelästigung führen. Dies bedeutet, daß beispielsweise tertiäre Amine, die ebenfalls als Cokatalysatoren vorgeschlagen wurden, aus diesem Grunde ungeeignet sind. Darüber hinaus beeinflussen Amine in ungünstiger Weise die Stahlhaftung im Reifen.
2. Er soll den Verlauf der Polymerisation so steuern, daß das erhaltene Polymere mehr als 70 % 1,2- und 3,4-Struktureinheiten aufweist.
3. Grundsätzlich ist die Wirkung eines Cokatalysators von dem Verhältnis der Molmengen von Cokatalysator und Katalysator, d. h. der Li-organischen Verbindung, abhängig. Die gemäß 2) zu erzielende Wirkung sollte bereits mit einem Molverhältnis Cokatalysator/Katalysator von 5 : 1 erreichbar sein.
4. Der Zusatz eines Cokatalysators beeinflußt die Ausbeute an Polyisopren. Cokatalysatoren, mit denen sich Ausbeuten von 90 % nicht erzielen lassen, sind ungeeignet.
5. Der Cokatalysator soll gegenüber den bei der Polymerisation als Anion vorliegenden "lebenden Polymeren" weitgehend inert sein. Dieser Forderung kommt insbesondere dann Bedeutung zu, wenn man die lebenden Polymere nach Abschluß der Polymerisation mit Kupplungsmitteln zu sternförmigen Kautschuken oder mit geeigneten elektrophilen Verbindungen umsetzt.
6. Der Cokatalysator soll vom verwendeten Lösemittel leicht destillativ abtrennbar sein.
7. Der Cokatalysator sollte hohe Polymerisationsgeschwindigkeiten ermöglichen.
8. Der Cokatalysator sollte leicht synthetisch zugänglich sein.

Im Hinblick auf diese Anforderungen kommen als Cokatalysatoren grundsätzlich nur die ethergruppenhaltigen Verbindungen in Frage.

Aliphatische Dialkylether wie z. B. Diethylether und cyclische Ether wie Tetrahydrofuran (THF) entfalten keine ausreichende Mikrostrukturregelung (vgl. T. A. Antkowiak et al, J. of Polymer Science Part A-1, Vol. 10, S. 1319 bis 1334 (1972).

So erzielt man beispielsweise bei der anionischen Polymerisation von Butadien mit Butyllithium in Gegenwart eines sogar 85fachen Überschusses an THF ein Polybutadien, das lediglich 49 % 1,2-Struktureinheiten enthält. Der Einsatz einer so großen Menge Cokatalysator wird in der Praxis als großer Nachteil empfunden.

Der gleichen Literaturstelle ist zu entnehmen, daß mit Ethylenglykoldimethylether als Cokatalysator bei der Polymerisation von Butadien ein Polymeres mit einem Anteil von 63,7 % 1,2-Struktureinheiten erhältlich ist. Dieser Glykolether weist jedoch zwei erhebliche Nachteile auf. Erstens ist er von Hexan nicht ohne weiteres abtrenn bar. Zweitens beträgt die Kupplungsausbeute dieses Ethylenglykoldialkylethers 0 %. Man mußte daher davon ausgehen, daß auch die beiden übrigen im Stand der Technik genannten Vertreter dieser Verbindungsklasse, nämlich Ethylenglykoldiethylether und Ethylenglykoldibutylether, den hier genannten Anforderungen nicht entsprechen würden.

Eine weitere Literaturstelle ist EP-A 95 629. Deren Gegenstand sind vulkanisierbare Massen, die u.a. mehr als 30% Polyisoprene enthalten und durch die Art ihrer Herstellung charakterisiert sind. Beispiel 1 beschreibt die Herstellung eines Polyisoprens durch Homopolymerisation in Gegenwart von Ethylenglykoldimethylethern. Der Tabelle 2 ist zu entnehmen, daß der 3,4-Gehalt dieses Polyisoprens 71% beträgt.

Gegenstand der EP-A 128 607 ist ein Verfahren zur Herstellung von Copolymeren aus aromatischen Vinylverbindungen und konjugierten Dienen, die einem Vinylgehalt von mindestens 30%, insbesondere 30 bis 60% (vgl. Anspruch 8) aufweisen und durch eine Mindestdifferenz des Gehaltes an vinylaromatischen Verbindungen an den Copolymerenden gekennzeichnet sind. Das Verfahren zeichnet sich weiterhin dadurch aus, daß als Mikrostrukturregler Verbindungen der Formel

$R_1 - O - CH_2 - CH_2 - O - R_2$

verwendet werden, wobei $R_2$ und $R_2$ gleiche oder unterschiedliche Alkylgruppen mit 2 bis 18 C-Atomen, insbesondere 2 bis 6 C-Atomen, eingesetzt werden. Bevorzugt sind Mikrostrukturregler, in denen $R_1$ für n-Butyl und $R_2$ für n-Butyl oder t-Butyl stehen.

Neben den Ethylenglykoldialkylethern sind in der Vergangenheit auch Diethylenglykoldialkylether als Cokatalysatoren vorgeschlagen worden (siehe z. B. EP-OS 0 090 365).

Allerdings sind die Ergebnisse auch hier unbefriedigend. Setzt man Diethylenglykoldimethylether bei der Polymerisation von Butadien und Styrol ein, so erhält man ebenfalls eine Kupplungsausbeute von 0 % (vgl. Beispiel 8 der US-PS 4 530 985). Eigene Versuche mit diesem Glykolether bei der Polymerisation von Isopren ergaben eine Polymerausbeute von lediglich 78 %.

Eigene Versuche mit Diethylenglykoldiethylether bei der Polymerisation von Isopren ergaben zwar eine verbesserte Polymerausbeute; aber es war nicht möglich, sternförmige Kautschuke aufzubauen. Dies spricht dafür, daß bei der Zugabe des Kupplungsmittels überhaupt keine lebenden Polymeren mehr vorhanden waren. Die Erfinder der US-PS 4 530 985 kommen daher folgerichtig zu dem Schluß, daß "viele der Modifiziermittel (gemeint sind die Cokatalysatoren), die in der Vergangenheit allgemein vorgeschlagen wurden, wie z. B. Diethylenglykoldimethylether dazu neigen, die Polymerisationsreaktion vorzeitig zu beenden und/oder die Kupplungsreaktion zu stören" (vgl. Spalte 1, Zeilen 31 bis 35). Auch J. Kminek et al. kommen zu dem Schluß, daß die "lebenden Polymeren" in Anwesenheit von Ethylenglykoldimethylether nur kurze Zeit stabil sind (vgl. Makromol. Chemie 183, 1755 (1982).

In der US-PS 4 530 985 wird vorgeschlagen, an Stelle der bekannten Glykolether Verbindungen der allgemeinen Formel

$R_1 - O - CH_2 - CH(R_2) - O - CR_3R_4 - O - R_5$

einzusetzen.

Die Mikrostrukturregelung und die Kupplungsausbeute dieser Cokatalysatoren sind allerdings ebenfalls unbefriedigend.

Diese Verbindungen sind zudem nur schwer zugänglich.

Aufgrund des aufgeführten Standes der Technik gab es kein Verfahren zur Herstellung von Polyisopren, bei dem die hier genannten Anforderungen der Praxis an den Cokatalysator erfüllt werden. Ziel der vorliegenden Erfindung war es, ein solches Verfahren zu entwickeln. Ein weiteres Ziel der vorliegenden Erfindung bestand darin, Polyisoprene zu entwickeln, die einen Gehalt an 1,2- und 3,4-Struktureinheiten von mehr als 70 %, vorzugsweise mehr als 85 %, aufweisen und zur Herstellung von Reifen und Dämpfungselementen verwendet werden können.

Es wurde jetzt überraschend ein solches Verfahren gefunden. Dieses besteht darin, daß man als Cokatalysator Ethylenglykoldialkylether der Formel

$R_1 - O - CH_2 - CH_2 - O - R_2$

einsetzt, wobei $R_1$ und $R_2$ Alkylreste mit einer unterschiedlichen Zahl von C-Atomen sind. Vorzugsweise beträgt die Summe der C-Atome der beiden Reste $R_1$ und $R_2$ 5 bis 7, insbesondere 6.

Als Reaktionsmedium wird ein inertes organisches Lösemittel verwendet. Geeignet sind insbesondere Kohlenwasserstoffe mit 6 bis 12 C-Atomen wie Pentan, Hexan, Heptan, Oktan und Dekan sowie deren cyclische Analogen. Geeignet sind auch aromatische Lösemittel wie z. B. Benzol, Toluol, Xylole. Selbstverständlich können auch Gemische der vorstehend beschriebenen Verbindungen eingesetzt werden.

Als Katalysator werden Alkyllithiumverbindungen eingesetzt, die durch Umsetzung von Lithium mit den entsprechenden Alkylhalogeniden leicht zugänglich sind. Die Alkylreste weisen 1 bis 10 C-Atome auf. Einzelne Wasserstoffatome können durch Phenylreste substituiert sein. Folgende Alkyllithiumverbindungen sind besonders geeignet: Methyllithium, Ethyllithium, Pentyllithium; bevorzugt wird Butyllithium.

Im Prinzip lassen sich auch bifunktionelle organische Lithiumverbindungen einsetzen. Diese sind jedoch weniger leicht zugänglich und insbesondere dann weniger günstig als ihre monofunktionellen Analogen, wenn man sternförmiges Polyisopren herstellen möchte.

Die Menge des eingesetzten Katalysators richtet sich nach dem Molekulargewicht, das eingestellt werden soll. Dieses liegt üblicherweise im Bereich von 50 000 bis 1 500 000. Zwischen dem Molekulargewicht [M], der Monomermenge in g [I] und der Molmenge des Katalysators [K] besteht folgender empirisch gefundener Zusammenhang

/[I] / [K] = [M],

der zur Ermittlung der erforderlichen Katalysatormenge üblicherweise herangezogen wird. Bei einem gewünschten Molekulargewicht im Bereich von 50 000 bis 400 000 werden, bezogen auf 100 Teile Isopren, vorzugsweise 0,128 bis 0,016 Teile n-Butyllithium, benötigt. Um Molekulargewichte unter 50 000 einzustellen, sind höhere Katalysatormengen erforderlich. Der Fachmann ist aufgrund weniger orientierender Versuche in der Lage, die Katalysatormengen anzugeben. Vorzugsweise wird der Cokatalysator zu Beginn der Reaktion zugesetzt. Er kann jedoch auch noch, wenn dies aus irgendwelchen Gründen zweckmäßig sein sollte, während der Polymerisation zugesetzt werden.

Erfindungsgemäß werden als Cokatalysatoren Ethylenglykolether der Formel

$R_1 - O - CH_2 - CH_2 - O - R_2$

eingesetzt. $R_1$ und $R_2$ sind C (1 - 4)-Alkylreste wie Methyl, Ethyl, n- und iso-Propyl sowie n-, iso, sek.- und tert. Butyl. Entscheidend ist, daß die Alkylreste $R_1$ und $R_2$ unterschiedlich sein müssen; die Reste $R_1$ und $R_2$ müssen sich in der Zahl der C-Atome unterscheiden. Vorzugsweise beträgt die Summe der C-Atome der beiden Reste 5 bis 7, insbesondere 6. Ein besonders bevorzugter Ethylenglykolether ist die Verbindung mit $R_1$ = Ethyl und $R_2$ = tert. Butyl. Die erfindungsgemäßen Glykolether sind bekannt. Sie sind beispielsweise nach demPrinzip der Williamson-Synthese aus einem Natriumalkoholat und einem Alkylalogenid zugänglich. Die Ether der Formel

$R_1 - O - CH_2 - CH_2 - O - C(CH_3)_3$

können in einfacher Weise durch Umsetzung des entsprechenden Alkohols

$R_1 - O - CH_2 - CH_2 - OH$

mit Isobuten in Gegenwart eines sauren Ionenaustauschers hergestellt werden.

Der Cokatalysator wird in einem Verhältnis von 2 : 1 bis 30 : 1, insbesondere 2 : 1 bis 15 : 1, bezogen auf die Molzahl des Katalysators eingesetzt. Bei höheren Temperaturen werden im allgemeinen größere Mengen an Cokatalysator benötigt, um die gewünschte Mikrostrukturregelung zu erzielen.

Eine besonders bevorzugte Variante des erfindungsgemäßen Verfahrens besteht darin, die nach weitgehend vollständiger Umsetzung der Monomeren erhaltenen Polyisopreneinheiten mit einem Kupplungsmittel zu sternförmigen Polymeren zu kuppeln. Eine andere Möglichkeit besteht darin, die erhaltenen Polyisopreneinheiten mit reaktionsfähigen Elektrophilen wie z. B. Ketonen, Epoxiden, Estern und Isocyanaten umzusetzen. In beiden Fällen erhält man ein funktionalisiertes Polyisopren.

Zu diesem Zweck geeignete Kupplungsmittel sind insbesondere Tetrahalogenide der Elemente Silizium, Germanium, Zinn und Blei sowie Aromaten, die mindestens 2 Vinylgruppen tragen, wie z. B. 1,3,5-Trivinylbenzol und 1,3- und 1,4-Divinylbenzol. Letztere können gegebenenfalls auch in mehreren Portionen zugesetzt werden.

Die Polymerisation wird im Temperaturbereich von 0 bis 100 °C durchgeführt. Bevorzugt arbeitet man bei 40 bis 70 °C.

Die Kupplung wird bei 0 bis 150 °C, vorzugsweise 40 bis 100 °C, durchgeführt.

Die erhaltenen Polyisoprene weisen ein Molekulargewicht von 40 000 bis 1 500 000, vorzugsweise 200 000 bis 1 000 000, auf.

Das Verfahren kann sowohl diskontinuierlich wie kontinuierlich betrieben werden.

Die erhaltenen amorphen Polymerisate des Isoprens werden, wenn sie zu Vulkanisaten verarbeitet werden sollen, mit aktiven, verstärkenden Füllstoffen, einem Vulkanisationsmittel und üblichen Zusatzstoffen gemischt. Im allgemeinen ist es erforderlich, diese Vermischung unter Einwirkung von Scherkräften durchzuführen.

Massen, welche zur Herstellung von Reifenlaufflächen bestimmt sind, werden im allgemeinen zu Rohlaufstreifen geformt. Bei der Homogenisierung und Formgebung, die beispielsweise in einem Extruder erfolgen kann, werden die Bedingungen von Temperatur und Zeit so gewählt, daß keine Vulkanisation eintritt.

Die Kautschukkomponente besteht beispielsweise aus 70 bis 100 Massen-% eines Kautschuks der Erfindung und 0 bis 30 Massen-% eines Kautschuks aus der Gruppe der bekannten, amorphen, hochungesättigten Allzweckkautschuke wie z. B. Styrol-Butadien-Kautschuk, 1,4-cis-Polybutadien, 1,4-cis-Polyisopren und Naturkautschuk.

Aktive, verstärkende Füllstoffe sind beispielsweise Reifenlaufflächenruße unterschiedlicher Aktivität, insbesondere solche aus der N-300-Reihe (ASTM), mit Silan Haftvermittlern behandelte, hochdisperse Kieselsäuren und ihre Gemische.

Übliche Vulkanisationsmittel enthalten z. B. Schwefel in Kombination mit Beschleunigern. Die Menge des Vulkanisationsmittels richtet sich nach den übrigen Komponenten in der vulkanisierbaren Masse

und kann durch einfache, orientierende Versuche ermittelt werden.

Als Zusatzstoff können die in der Kautschuktechnik üblichen Weichmacheröle, bevorzugt aromatische, aliphatische und naphthenische Kohlenwasserstoffe sowie übliche Hilfsmittel, wie beispielsweise Zinkoxid, Stearinsäue, Harzsäuren, Alterungsschutzmittel und Ozonschutzwachse, in üblichen Mengen zugesetzt werden.

Die erfindungsgemäßen Isoprenpolymerisate eignen sich insbesondere zur Herstellung der Laufflächen von Pkw- und Lkw-Reifen, und zwar sowohl zur Herstellung von Neureifen als auch zur Runderneuerung von Altreifen.

Die erhaltenen Reifenlaufflächen zeichnen sich durch eine ausgezeichnete Haftung aus. Hervorzuheben ist auch die außergewöhnlich hohe Reversionsstabilität beim Vulkanisationsprozeß und die außergewöhnlich hohe Netzwerkstabilität der Reifenlaufflächen bei dynamischer Beanspruchung. Die Isoprenpolymerisate eignen sich daher besonders zur Herstellung der Laufflächen von Lkw-Reifen (vgl. EP-OS 0 168 524).

Die erfindungsgemäßen Polymerisate auf Basis von Isopren können auch zur Herstellung von Dämpfungselementen verwandt werden (siehe z. B. DE-OS 24 59 357).

Experimenteller Teil

Als Lösemittel wurde ein Kohlenwasserstoffgemisch eingesetzt, das zu etwa 50 % aus Hexan bestand. Weitere Bestandteile dieses hydrierten $C_6$-Schnittes waren insbesondere Pentan, Heptan und Oktan sowie deren Isomere. Das Lösemittel wurde über einem Molekularsieb der Porenweite 0,4 nm getrocknet, so daß der Wasseranteil unter 10 ppm gesenkt wurde, und anschließend mit $N_2$ gestrippt.

Die organische Lithiumverbindung war n-Butyllithium, die in Form einer 20gewichtsprozentigen Lösung in Hexan zur Anwendung kam.

Isopren wurde vor seinem Einsatz 24 Stunden über Calciumhydrid unter Rückfluß gekocht, abdestilliert und mit n-Butyllithium in Gegenwart von o-Phenanthrolin austitriert.

Die Glykolether wurden über Calciumhydrid destilliert und anschließend mit n-Butyllithium in Gegenwart von o-Phenanthrolin austitriert.

Das Divinylbenzol wurde in Form eines Isomerengemisches aus m- und p-Divinylbenzol nach Trocknung über Aluminiumoxid eingesetzt.

In einem mit trockenen Stickstoff gespülten V2A-Rührautoklaven wurden 1,5 l $C_6$-Kohlenwasserstoffgemisch, 200 g Isopren und der jeweilige Cokatalysator bei 50 °C vorgelegt. Die Menge des Cokatalysators ergibt sich aus den jeweils angegebenen Massenverhältnissen von Katalysator zu Cokatalysator. Die Polymerisation wurde durch Zugabe von 2,5 m Mol n-Butyllithiumlösung gestartet und isotherm gehalten. Nach 2 Stunden wurde 1,6 g Divinylbenzol zugesetzt.

Das erhaltene Polymere wird, bezogen auf 100 Teile Isopren, mit 0,5 Teilen 2,2'-Methylen-bis-(4-methyl-6-tert. butylphenol) stabilisiert, mit 2 500 ml eines Gemisches aus Isopropanol und Methanol im Volumenverhältnis 80 : 20 gefällt und bei 50 °C getrocknet.

Als Kupplungsausbeute wird der Prozentanteil an Kautschuk angesehen, der nach der Umsetzung mit einem Kupplungsmittel eine sternförmige Struktur aufweist und sich gegenüber dem ungekuppelten Kautschuk durch ein erheblich höheres Molekulargewicht auszeichnet. Die Bestimmung erfolgt mit der GPC-Analyse, wobei Tetrahydrofuran als Lösemittel und Polystyrol als Säulenmaterial eingesetzt wird. Die Polymerisate werden mit einem Lichtstreuungsdetektor charakterisiert. Zu diesem Zweck werden dem Reaktor vor Zugabe des Kupplungsmittels und zu Ende der Reaktion Proben entnommen.

Die Mikrostruktur wird mit Hilfe des IR-Spektrums bestimmt.

Die folgenden Beispiele 1 bis 8 sind erfindungsgemäß, die nachfolgenden Beispiele A bis F sind Vergleichsversuche.

Tabelle

| Versuch | $R_1$ | $R_2$ | Verhältnis Cokatalysator/Katalysator | nach 2,5 Stunden Polymerausbeute % | Gehalt an 1,2-SE in % | 3,4-SE[1] in % | Kupplungsausbeute | Polymerausbeute nach 20 Min. | Abtrennbarkeit von Hexan |
|---|---|---|---|---|---|---|---|---|---|
| 1 | $CH_3$ | $C(CH_3)_3$ | 5 | 95 | 9 | 80 | 65 | 65 | gut |
| 2 | $CH_3$ | $C(CH_3)_3$ | 10 | 95 | 11 | 86 | 60 | | gut |
| 3 | Et | $C(CH_3)_3$ | 5 | 95 | 8 | 81 | 60 | | gut |
| 4 | Et | $C(CH_3)_3$ | 10 | 96 | 9 | 85 | 70 | | gut |
| 5 | Prop | $C(CH_3)_3$ | 5 | 94 | 7 | 75 | 80 | | gut |
| 6 | Prop | $C(CH_3)_3$ | 10 | 93 | 8 | 84 | 70 | | gut |
| 7 | Et | But | 5 | 95 | 9 | 82 | 65 | 70 | gut |
| 8 | Et | But | 10 | 94 | 10 | 84 | 60 | | gut |
| A | Me | Me | 5,5 | 90 | 5 | 73 | 0 | | schlecht |
| B | Et | Et | 5 | 95 | 8 | 83 | 70 | 50 | befriedigend |
| C | t-But | t-But | 5 | 95 | 5 | 60 | 80 | | gut |
| D | Me | $O-CH_2-CH_2-O-Me$ | 3,6 | 78 | 8 | 81 | 0 | | gut |
| E | Et | $O-CH_2-CH_2-O-Et$ | 3,8 | 89 | 8 | 78 | 0 | | gut |
| F | But | $O-CH_2-CH_2-O-But$ | 6,8 | 90 | 6 | 71 | 0 | | gut |

[1] SE = Struktureinheiten

Der Tabelle ist zu entnehmen:

1. Die Dialkylether des Diethylenglykols (siehe Vergleichsbeispiele D, E und F) bewirken, daß sich die entstandenen Polyisopreneinheiten nicht mehr kuppeln lassen. Das gleiche gilt für Ethylenglykoldimethylether (siehe Vergleichsversuch A). Diese Verbindung ist von n-Hexan nicht destillativ abtrennbar.

2. Ethylenglykoldiethylether ermöglicht zwar eine Kupplung der Polyisopreneinheiten, ist aber nur mit vergleichsweise großem Aufwand von Lösemittel abtrennbar und beeinflußt offensichtlich auch ungünstig die Polymerisation, was an der deutlich niedrigeren Polymerausbeute nach 20 Minuten erkennbar ist.

3. Die Dibutylether des Ethylenglykols und des Diethylenglykols entfalten eine unbefriedigende Mikrostrukturregelung.

## Patentansprüche

1. Verfahren zur Herstellung von gegebenenfalls funktionalisiertem Polyisopren mit einem Gehalt an 1,2- und 3,4-Struktureinheiten von mehr als 70% durch anionische Polymerisation von Isopren in einem inerten organischen Lösemittel in Gegenwart einer Li-organischen Verbindung als Katalysator und einem Ether als Cokatalysator, dadurch gekennzeichnet, daß man als Katalysator eine mono- oder bifunktionelle Alkyllithiumverbindung mit Alkylresten von 1 bis 10 C-Atomen und als Cokatalysator einen Ethylenglykoldialkylether der Formel

$R_1-O-CH_2-CH_2-O-R_2$,

wobei $R_1$ und $R_2$ Alkylreste mit einer unterschiedlichen Zahl von C-Atomen aus der Gruppe Methyl-, Ethyl-, n- und iso-Propyl sowie n-, iso-, sek.- und tert.-Butyl sind, im Verhältnis 2:1 bis 15:1, bezogen auf die Molzahl des Katalysators, bei Temperaturen von 0 bis 100°C einsetzt.

2. Verfahren nach Anspruch 1, dadurch gekennzeichnet, daß die Summe der C-Atome in den beiden Alkylresten $R_1$ und $R_2$ 5 bis 7 beträgt.

3. Verfahren nach Anspruch 2, dadurch gekennzeichnet, daß die Summe der C-Atome in den beiden Alkylresten $R_1$ und $R_2$ 6 beträgt.

4. Verfahren zur Herstellung von Polyisopren mit sternförmiger Mikrostruktur gemäß Anspruch 1, dadurch gekennzeichnet, daß man dem Polymerisationsansatz zu Ende der Reaktion ein Kupplungsmittel zusetzt.

5. Verfahren gemäß Anspruch 4, dadurch gekennzeichnet, daß man als Kupplungsmittel ein Di- oder Trivinylbenzol einsetzt.

6. Polyisopren mit einem Anteil an 1,2- und 3,4-Struktureinheiten von mehr als 70% und einem Molekulargewicht von 40 000 bis 1 500 000, hergestellt nach den Verfahren der Ansprüche 1 bis 5.

7. Verwendung der nach den Ansprüchen 1 bis 5 erhaltenen Polyisoprene zur Herstellung von Reifen und Dämpfungsmaterialien.

## Claims

1. A process for the preparation of optionally functionalized polyisoprene containing more than 70% of 1,2- and 3,4-structural units by anionic polymerization of isoprene in an inert organic solvent in the presence of an organolithium compound as catalyst and in the presence of an ether as cocatalyst, characterized in that, as catalyst, a monofunctional or bifunctional alkyllithium compound containing alkyl radicals having 1 to 10 C atoms and, as cocatalyst, an ethylene glycol dialkyl ether of the formula

$R_1-O-CH_2-CH_2-O-R_2$,

where $R_1$ and $R_2$ are alkyl radicals having different numbers of C atoms, from the group comprising methyl, ethyl, n- and iso-propyl and n-, iso-, sec.- and tert.-butyl, are employed in the ratio 2:1 to 15:1, relative to the number of moles of catalyst, at temperatures of from 0 to 100°C.

2. A process according to claim 1, characterized in that the total number of C atoms in the two alkyl radicals $R_1$ and $R_2$ is from 5 to 7.

3. A process according to claim 2, characterized in that the total number of C atoms in the two alkyl radicals $R_1$ and $R_2$ is 6.

4. A process according to claim 1 for the preparation of polyisoprene having a stellate microstructure, characterized in that a coupling agent is added to the polymerization batch at the end of the reaction.

5. A process according to claim 4, characterized in that, as coupling agent, a divinylbenzene or trivinylbenzene is employed.

6. Polyisoprene containing more than 70% of 1,2- and 3,4-structural units and having a molecular weight of from 40,000 to 1,500,000, prepared by the process of claims 1 to 5.

7. The use of a polyisoprene obtained according to claims 1 to 5 for the production of tyres and vibration-absorbing materials.

## Revendications

1. Procédé de préparation de poly-isoprène éventuellement fonctionnalisé d'une teneur en unités structurelles 1,2 et 3,4 de plus de 70%, par polymérisation anionique d'isoprène dans un solvant organique inerte, en présence d'un composé d'organo-lithium comme catalyseur et d'un éther comme co-catalyseur, caractérisé par le fait que l'on utilise comme catalyseur un composé mono-fonctionnel ou bi-fonctionnel d'alkyl-lithium comportant des radicaux alkyle présentant de 1 à 10 atomes de carbone et, comme co-catalyseur, un éther dialkylique d'éthylène-glycol, de formule

$R_1$–O–$CH_2$–$CH_2$–O–$R_2$,

$R_1$ et $R_2$ représentant des radicaux alkyle comportant un nombre différent d'atomes de carbone, pris dans le groupe des radicaux méthyle, éthyle, n-propyle et isopropyle, ainsi que des radicaux n-butyle, isobutyle, sec.-butyle et tert.-butyle, dans une proportion de 2:1 à 15:1, relativement au nombre de moles de catalyseur, à des températures de zéro à 100°C.

2. Procédé selon la revendication 1, caractérisé par le fait que la somme des atomes de carbone dans les deux radicaux alkyle $R_1$ et $R_2$ a une valeur de 5 à 7.

3. Procédé selon la revendication 2, caractérisé par le fait que la somme des atomes de carbone dans les deux radicaux alkyle $R_1$ et $R_2$ a une valeur de 6.

4. Procédé de préparation de poly-isoprène présentant une micro-structure en étoile, selon la revendication 1, caractérisé par le fait qu'à la fin de la réaction, on ajoute un agent de copulation à la charge de polymérisation.

5. Procédé selon la revendication 4, caractérisé par le fait que l'on utilise, comme agent de copulation, un divinyl-benzène ou un trivinyl-benzène.

6. Un poly-isoprène présentant une fraction de plus de 70% en unités structurelles 1,2 et 3,4 et un poids moléculaire de 40 000 à 1 500 000, préparé selon les procédés des revendications 1 à 5.

7. L'utilisation, pour la fabrication de pneumatiques et de matériaux d'amortissement, des poly-isoprènes obtenus selon les revendications 1 à 5.